(19) Europäisches Patentamt
European Patent Office
Office européen des brevets

(11) **EP 1 751 709 B1**

(12) **EUROPEAN PATENT SPECIFICATION**

(45) Date of publication and mention
of the grant of the patent:
**23.07.2008 Bulletin 2008/30**

(51) Int Cl.:
***G06T 1/00*** (2006.01)

(21) Application number: **05739727.5**

(22) Date of filing: **04.05.2005**

(86) International application number:
**PCT/IB2005/051453**

(87) International publication number:
**WO 2005/109338 (17.11.2005 Gazette 2005/46)**

(54) **METHOD OF DETECTING WATERMARKS**

VERFAHREN ZUR ERFASSUNG VON WASSERZEICHEN

PROCEDE DE DETECTION DE FILIGRANES

(84) Designated Contracting States:
**AT BE BG CH CY CZ DE DK EE ES FI FR GB GR
HU IE IS IT LI LT LU MC NL PL PT RO SE SI SK TR**

(30) Priority: **10.05.2004 EP 04102007**

(43) Date of publication of application:
**14.02.2007 Bulletin 2007/07**

(73) Proprietor: **Koninklijke Philips Electronics N.V.
5621 BA Eindhoven (NL)**

(72) Inventors:
• **VAN LEEST, Adriaan, J.**
**NL-5656 AA Eindhoven (NL)**
• **LANGELAAR, Gerrit, C.**
**NL-5656 AA Eindhoven (NL)**

(74) Representative: **Schmitz, Herman Jan Renier
Philips
Intellectual Property & Standards
P.O. Box 220
5600 AE Eindhoven (NL)**

(56) References cited:
**US-A1- 2004 005 076**

• **WESSELY U ET AL: "Watermarking system for
analog or compressed video" INTERNATIONAL
CONFERENCE ON IMAGING SCIENCE,
SYSTEMS AND TECHNOLOGY (CISST'03)
CSREA PRESS USA, USA, vol. 2, 2003, pages
371-377 Vol.2, XP009050307 ISBN: 1-892512-47-5**
• **LIN E T ET AL: "Spatial synchronization using
watermark key structure" PROCEEDINGS OF
THE SPIE - THE INTERNATIONAL SOCIETY FOR
OPTICAL ENGINEERING SPIE-INT. SOC. OPT.
ENG USA, vol. 5306, no. 1, 22 January 2004
(2004-01-22), pages 536-547, XP002335355 ISSN:
0277-786X**
• **KALKER T ET AL: "ANALYSIS OF WATERMARK
DETECTION USING SPOMF" PROCEEDINGS
1999 INTERNATIONAL CONFERENCE ON IMAGE
PROCESSING. ICIP'99. KOBE, JAPAN, OCT. 24 -
28, 1999, INTERNATIONAL CONFERENCE ON
IMAGE PROCESSING, LOS ALAMITOS, CA :
IEEE, US, vol. VOL.1 OF 4, 1999, pages 316-319,
XP000974746 ISBN: 0-7803-5468-0**
• **LIN E.T.; DELP E.J.: 'Temporal Synchronization
in Video Watermarking - Further Studies'
PROCEEDINGS OF THE SPIE vol. 5020, 2003,
pages 493 - 504, XP009088624**

**Description**

FIELD OF THE INVENTION

The present invention relates to the field of detecting watermarks and thereby determining a measure of scale factor.

BACKGROUND TO THE INVENTION

Watermarks are often included in a subtle manner in audio-video programme content either as a mechanism of validating authenticity of the content or for forensic purposes of detecting unauthorized pirating or copying of the content. In order for the watermarks not to perceptibly degrade or distort programme content when embedded thereinto, the watermarks are only faintly added to the content whose composition can vary considerable from image to image therein. In consequence, it is established practice to accumulate watermark information over numerous images of a sequence in one or more buffers and then apply correlation techniques using one or more expected watermark templates in order to confirm presence or alternatively absence of the watermarks in the audio-video content.

It is known that spatial correlation based watermark detection is extremely difficult, if not virtually impossible, to implement unless an original scale of the video content is known. Many contemporary watermarking schemes employ watermark patterns embedded in video content such that the watermark patterns are repeated in a tiled manner, namely tiled according to a known spatial reference grid repeatedly throughout images in video content. It is conventional practice to retrieve a measure of the original scale by correlating adjacent watermark tiles extracted from the video content; the measure of original scale factor corresponds to a position of a correlation peak thereby derived.

Watermark schemes using tiled watermarks that are conventionally employed have several disadvantages as follows:

(1) it is necessary to employ repeating watermark patterns in each image, also known as a frame, in a sequence of images included in video content. Such tiled watermarks are not translated reliably when a format of corresponding video content is translated, for example when video content is sub-sampled to SIF format; when sub-sampling is applied, watermark pattern sizes are very limited and sometimes too small to be useful, for example for guaranteeing authenticity or for evidence purposes, in DIVX coded video content;

(2) if the watermark pattern is included in fields of images rather than frames of images when wide-screen video programme content is considered, such fields are found in practice to be too small in a vertical image direction to embed two vertically adjacent video patterns; and

(3) cropping and/or scaling can cause video images, namely frames, to become too small in a vertical direction to include two vertically adjacent watermark tiles.

A particular problem encountered by the inventors concerns a watermark embedder which is operable to tile a 128 element x 128 element watermark pattern over video fields. A watermark detector compatible with the embedder is capable of retrieving a measure of horizontal scale factor by correlating two horizontally adjacent 128 element x 128 element watermark tiles; similarly, the detector is capable of retrieving a measure of vertical scale factor by correlating two vertically adjacent such watermark tiles. The measure of the scale factor is determined from the position of highest correlation peaks in a first row and column of an associated correlation field.

The detector applying the above approach to scale factor determination is capable of coping with full-D1 watermarked video. However, in practice, video programme content data conveyed by DVD's as data carriers is often subjected to scaling down and subsequent conversion to corresponding data in DIVX format. Such processing can pose problems for watermark detectors for reliably determining occurrence of watermark tiles in the converted DIVX data. For example, original video programme content includes a sequence of images in wide screen format, namely having an aspect ratio of 16:9 (width: height) corresponding to dimensions of 720 x 480 elements. The video content subsequently has its black borders removed so as to generate cropped video content where images then have a format of 720 x 280 elements (width: height). Sub-sampling is then applied to the cropped video content to yield image frame dimensions of 520 x 200 elements in cropped sub-sampled video content. As a result, the sub-sampled images each comprise two sub-fields of 512 x 100 elements. If the original video content includes two vertically adjacent watermark tiles, the cropped sub-sampled video content presented to a watermark detector expecting one or more 128 x 128 element watermark tiles results in the detector trying to determine a measure of scale factor based on correlating two 128 x 50 element tiles; in consequence, the detector's watermark detection performance is drastically reduced which causes considerable difficulties in determining a measure of vertical scale factor. If the detector is unable to determine vertical scale factor correctly, it is then virtually impossible for it to detect a data payload associated with the watermark included in the original video content. This data payload includes, for example, information indicative of routes of distribution, this information being useable for forensic tracking.

In a Japanese patent application no. JP2000151984, it is proposed to alternately embed in audio-video content an original watermark and a shifted version of that watermark; the shifted watermark is translated by a known amount relative to the original watermark. Subsequently, watermark detectors arranged to correlate a test watermark corresponding to the original watermark and the shifted watermark are able to detect the watermark shift in the audio-video content. If the content has been scaled, the shift vector will have been altered by a similar scale factor. Thus, detection of the shift enables a scale factor to which the audio-video content has been scaled to be determined.

"Spatial synchronization Using Watermark Key Structure", Proc. of SPIE-IS&T Electronic Imaging, SPIE Vol. 5306,2004, SPIE and IS&T 0277-786X04/$15, describes watermarks embedded in non-overlapping blocks of a video. A distance between peaks in the auto-correlation of the tiled watermarks indicates the scale of the watermark, while orientation ot the peaks indicate the watermark rotation.

"Watermarking System for Analog or Compressed Video", by U. Wessely, G. Scheller, and S. Eichner, CISST '03 International Conference pp. 371-377, describes a discrete Wavelet transform based image watermarking algorithm. A Walsh series modulated by the watermark content as additive pseudo-random noise is used.

In order to address the aforementioned problems encountered with tile watermark detection, the inventors have developed the present invention. The present invention is found by the inventors to function especially well for wide-screen DIVX movies.

SUMMARY OF THE INVENTION

An object of the present invention is to provide an improved method of detecting watermarks and thereby deriving a measure of scale factor.

According to a first aspect of the present invention, there is provided a method of determining a measure of scale factor (MSF) by detecting a watermark included in a sequence of images wherein the watermark is included in several mutually changed forms in the sequence, the method comprising steps of:

> (a) receiving the sequence of images;
> (b) sorting the images substantially into a plurality of corresponding groups depending upon one or more relative changes applied to their included watermarks;
> (c) accumulating for each group at least a portion of one or more images thereof into corresponding buffers;
> (d) correlating contents of the buffers to determine one or more changes applied to the watermark included in the sequence; and
> (e) processing information concerning the one or more changes in relation to an expected scale factor to determine said measure of scale factor (MSF).

The invention is of advantage in that it is capable of providing a more accurate and/or reliable measure of scale factor in comparison to contemporary approaches.

Preferably, in the method, the one or more changes detected include at least one of: a translation change, a mirror-transposition change, and a rotation change. Although the method is found to function well for watermarks subject to transposition corresponding to lateral translation, these other forms of transposition are beneficially alternatively or additionally utilized in the method, especially mirror transposition.

Preferably, in the method, the analysis in step (d) includes steps of:

(f) converting contents of the buffers into corresponding data sets respectively in a spatial frequency form;
(g) point-wise multiplying the data sets to generate corresponding processed data; and then
(h) converting the processed data to a spatial format.

Such processing enables image information corresponding to un-watermarked programme content to be distinguished from watermark information on account of these being more clearly mutually distinguished in the spatial format. Preferably, the method further includes a step of normalizing the processed data prior to converting the processed data to the spatial format.

Preferably, the method includes steps of subjecting contents of the buffers to high-pass spatial filtration prior to converting them to corresponding data sets. Such high-pass filtration is of benefit in that it is capable of attenuating image content substantially irrelevant for purposes of watermark detection.

Preferably, the method includes steps of:

(i) analyzing the processed data in spatial format for determining positions of one or more correlation peaks; and
(j) deriving the measure of scale factor (MSF) from the positions of the one or more peaks.

Preferably, the method further comprises a step of cropping the processed data in spatial format to remove spurious peripheral correlation arising from correlation of image programme content prior to identifying the one or more peaks for determining the measure of scale factor (MSF). Such cropping is capable of enhancing reliability of watermark identification and thereby enhancing accuracy and/or reliability of watermark detection.

Preferably, the method is adapted for determining measures of scale factor (MSF) in a plurality of mutually different image directions. Application of the method in more than one direction is relevant when determining scale factor of 2-dimensional images which have been subject to mutually different scale-factor change in substantially vertical and horizontal image directions.

Preferably, in the method, the one or more changes applied to the watermark in the sequence includes a translation in at least one direction of magnitude s arranged to be less than half a width L of the watermark in the at least one direction, such that the measure of scale factor is calculated substantially from $z = (H_p/s)$ where $H_p$ is a determined position of a peak of correspondence. Alternatively, in the method, the one or more changes applied to the sequence of images includes a translation in at least one direction of magnitudes arranged to be more than half a width L of the watermark in the at least one direction, such that the measure of scale factor is calculated substantially from $z = (H_p - L) / (s - L)$ where $H_p$ is a determined position of a peak of correspondence.

According to a second aspect of the invention, there is provided a watermark detector for determining a measure of scale factor (MSF) by detecting a watermark in a sequence of images wherein the watermark is included in several mutually changed forms in the sequence, the detector including:

(a) switching means for sorting images included in the sequence into groups corresponding to one or more changes applied to their watermarks;
(b) buffers for accumulating at least a portion of one or more images from the groups;
(c) analyzing means for correlating contents of buffers to determine the one or more changes applied to the watermark in the sequence; and
(d) processing means for processing information concerning the one or more changes in relation to an expected scale factor for determining said measure of scale factor (MSF).

According to a third aspect of the invention, there is provided software executable in computer hardware for implementing the method according to the first aspect of the invention.

It will be appreciated that features of the invention are susceptible to being combined in any combination without departing from the scope of the invention.

DESCRIPTION OF THE DIAGRAMS

Embodiments of the invention will now be described, by way of example only, with reference to the following diagrams wherein:

Fig. 1 is a schematic diagram of video programme content according to the invention, the content comprising a temporal sequence of images arranged in time slots;
Fig. 2 is an illustration of a watermark detection process according to the invention;
Fig. 3 is an example of disposition of a watermark window in images of the video content of Fig. 1; and
Figs. 4 to 10 are illustrations of transformed watermark patterns for correlation using the process of Fig. 2.

DESCRIPTION OF EMBODIMENTS OF THE INVENTION

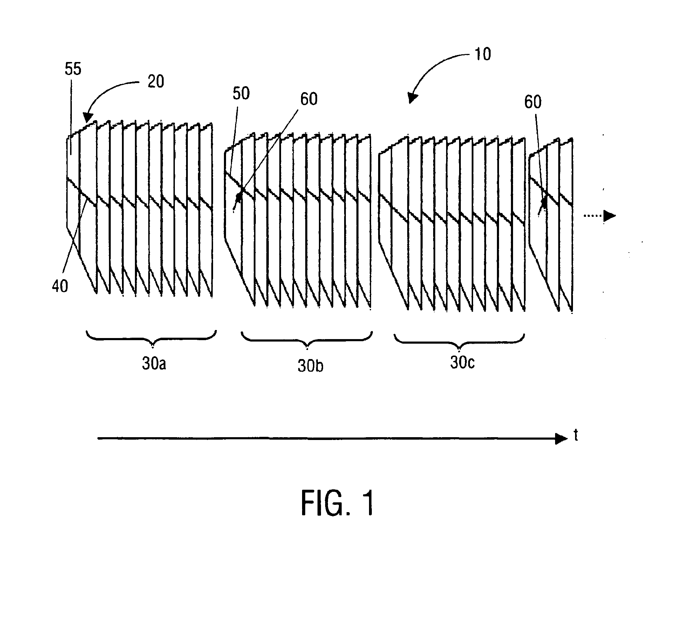

In overview, the present invention is concerned with temporally changing certain geometrical watermark properties in video programme content comprising a sequence of images grouped in time slots for enabling a watermark detector to process images from different time slots and analyze them for deriving a measure of scale factor. For example, a watermark embedder is beneficially arranged to embed a standard watermark pattern in an original position in the first 600 image frames in the sequence of images. In 600 subsequent image frames in the sequence, the embedder is operable to embed the watermark in a transposed format, for example mirrored and/or spatially translated and/or rotated. In a next 600 image frames, the embedder is arranged to embed the watermark in the original position and so on in a repetitive alternating manner as depicted in Fig. 1.

In Fig. 1, the sequence of image frames is indicated generally by 10. The sequence 10 includes image frames, for example a first image frame as indicated by 20. The sequence 10 is arranged in a temporally sequential manner wherein time is denoted by an arrow with symbol "t" with earlier image frames at a left hand side and later image frames at a right hand side in Fig. 1. The sequence 10 is sub-divided into time slots, for example first, second and third time slots 30a, 30b, 30c respectively. Each time slot, as described in the foregoing, includes 600 frame images; alternatively, each time slot can be arranged to include other numbers of frame images, for example 300 frame images.

Alternating a normal and a changed version of the watermark provides sufficient information for enabling a watermark detector processing the sequence 10 to identify the watermark embedded therein, for example for determining measures of scale factor, provided that the detector knows the magnitude of the change applied, for example how many pixels the original watermark was shifted to generate the changed watermark. The detector is preferably able to determine one or more vectors associated with the change.

In circumstances where the change corresponds to shifting the watermark in an alternating manner from time slot to time slot, the detector collects an arbitrary part of the sequence 10 , for example it extracts data corresponding to a 128 x 128 element tile from frame images in a time slot and accumulates them in a first buffer. Subsequently, the detector continues such extraction for image frames in a next time slot and accumulates them in a second buffer. The detector then correlates accumulated data in the first and second buffers, for example using a SPOMF procedure, and outputs correlation results to a correlation buffer; a peak corresponding to greatest correlation is identified by the detector by analyzing correlation results from the correlation buffer. From this peak of greatest correlation, a measure of scale factor is then derivable using the detector.

In overview, the present invention has potential application in at least one of the following technical fields:

(a) scale and/or watermark detectors for very low watermark payload bit-rate applications;
(b) for detecting a measure of scale factor in high definition (HD) video programme content; and
(c) for determining a measure of scale factor in forensic tracking applications, for example for identifying persons responsible for leaking pre-released movies to communication networks such as the Internet.

The present invention is especially pertinent to determining a measure of scale factor in upcoming HD video content format. On account of such a high quality format, watermark patterns are only lightly embedded into HD video content to preserve outstanding HD quality. However, when lightly watermarked HD video content is subjected to a long processing path, namely subjecting to numerous transformation operations, it is desirable that lightly embedded watermark information is still detectable in processed HD video content output from the path. An example of a long processing path involves steps of:

(a) HD to SD;
(b) lossy compression;
(c) distribution via one or more communication networks using DIVX compression; and
(d) processing in CE equipment involving another lossy compression step.

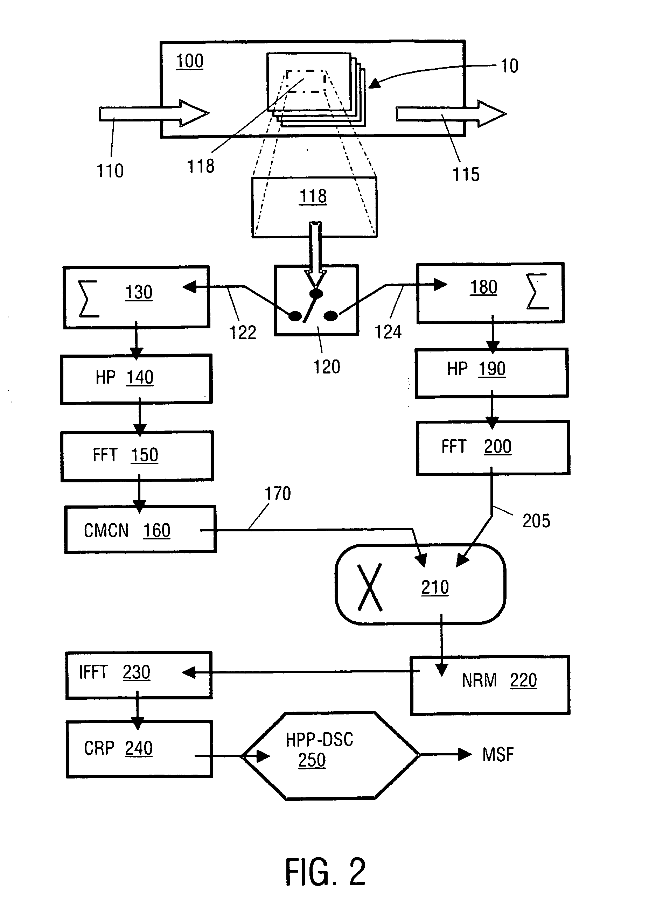

In order to further elucidate the present invention, embodiments of the invention will now be described.
A detector for determining a measure of scale factor from watermarks included in the sequence 10 will now be described with reference to Fig. 2 wherein text mnemonics employed have interpretations as provided in Table 1.

Table 1:

| Mnemonic | Reference numeral | Interpretation |
|---|---|---|
| HP | 140, 190 | Spatial high pass filter function |
| FFT | 150, 200 | Fast Fourier Transform function |
| CMCN | 160 | Complex conjugate generator function |
| NRM | 220 | Normalization function |
| IFFT | 230 | Inverse Fast Fourier Transform function |
| CRP | 240 | Crop borders function |
| HPP-DSC | 250 | Find highest correlation peak position and derive scale function |
| MSF | - | Measure of scale factor |

The detector is preferably implemented in computer hardware executing software to perform functions as depicted in Fig. 2 for providing a scale factor identification process. The process involves use of a buffer 100 for receiving an input video stream 110 comprising the sequence of image frames 10 and outputting this stream at 115 for further handling. The process utilizes a tile window 118 for analysis, the tile window 118 including watermark data lightly embedded into image frame data. The process further comprises a data switch 120 connected such that its first output 122 is coupled to a first processing chain including in sequence a first accumulator buffer 130, a spatial high pass filter function (HP) 140, a fast Fourier transform function (FFT) 150 and a complex conjugate generating function (CMCN) 160 for outputting a first conjugated Fourier transform output 170. Moreover, a second output 124 of the data switch 120 is coupled to a second processing chain including in sequence a second accumulator buffer 180, a spatial high pass filter function (HP) 190 and a fast Fourier transform function (FFT) 200 for outputting a second Fourier transform output 205. Furthermore, the process further comprises a point-wise multiplication function 210 for receiving the first and second Fourier transform outputs 170, 205 respectively and generating corresponding multiplication data. In the process, there is further included a third processing chain comprising in sequence a normalization function (NRM) 220, an inverse fast Fourier transform function (IFFT) 230, a crop borders function (CRP) 240 and finally a peak detection function (HPP-DSC) 250 for finding a position of a highest correlation peak and thereby deriving a measure of scale factor (MSF) as will be described in more detail later. The third processing chain is operable to receive the multiplication data from the point-wise multiplication function 210.

Operation of the process depicted in Fig. 2 will now be described.

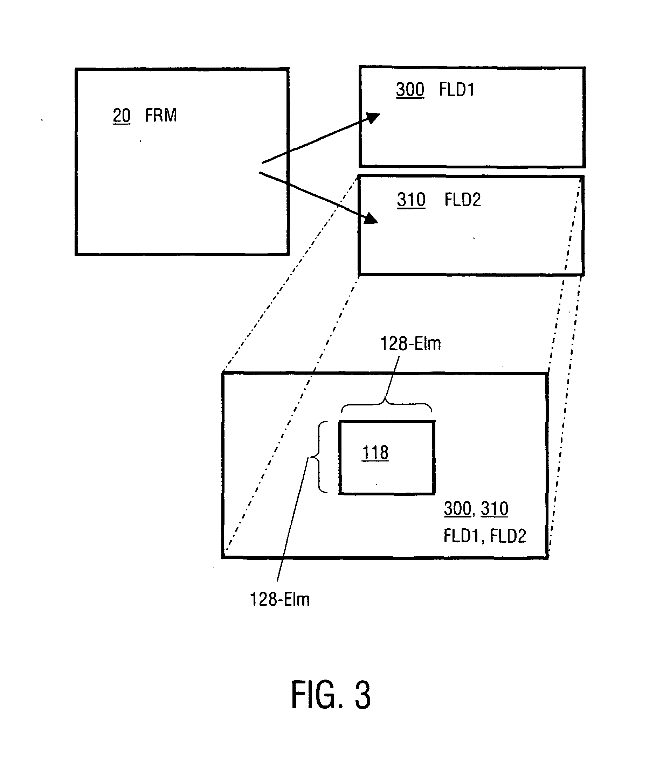

In the first buffer 130, the process accumulates watermark tile data from the window 118 in a first 600 video fields, namely 300 image frames. The window 118 can have any size, depending upon requirements; however, the process of Fig. 2 provides a more reliable measure of scale factor as the size of the window 118 is increased. Most preferably, the window 118 has a size in the order of 128 x 128 elements, for example 128 x 128 pixels. Preferably, the window 118 corresponds to a substantially central region in each of the fields of the frame images in a manner depicted in Fig. 3 wherein the image frame (FRM) 20 comprises first and second fields (FLD1, FLD2) 300, 310 respectively; the window 118 is arranged to be preferably centrally disposed in each of the fields 300, 310. However, other positions for the window 118 within each frame are possible, for example an off-center region thereof. Thereafter, the process accumulates a second 600 video fields, namely 300 image frames, in a similar manner into the second buffer 180.

Accumulated data from the first and second buffers 130, 180 are subject in the filter functions 140, 190 respectively to spatial high-pass filtration and thereafter to a transformation to the spatial frequency domain. Output from the Fourier function 150 is subject to generation of corresponding complex conjugates in the conjugate function 160.

The high pass functions 140, 190 are preferably implemented using a 3x3 matrix filter having coefficients as provided in Equation 1 (Eq. 1):

$$F = \begin{bmatrix} -1 & -1 & -1 \\ -1 & 8 & -1 \\ -1 & -1 & -1 \end{bmatrix} \qquad \text{Eq. 1}$$

A correlation of contents of the buffer 130 with contents of the buffer 180 is preferably implemented using a SPOMF approach which includes the normalization function 220 therein. Correlation in the point-wise multiplication function 210 is preferably implemented using a SPOMF approach which involves point-wise multiplication. Results of this point-wise multiplication are normalized in the normalization function 220 followed by translation from the spatial frequency domain to corresponding spatial information which is cropped to remove spurious edge artefacts before being analyzed in the function 250 to determine spatial position of highest correlation peak as described earlier.

Normalization in the function 220 for an input array z of complex values is achieved by applying Equations 2 and 3 (Eq. 2, 3) to replace complex values in the array with normalized equivalents:

$$\frac{z}{\sqrt{re(z)^2 + im(z)^2}} \qquad \text{for } z \neq 0 \qquad \text{Eq. 2}$$

$$1 \qquad \text{for } z = 0 \qquad \text{Eq. 3}$$

Regarding the cropping function 240, the inventors identified during experiments when devising the present invention that high spurious peaks occurred at borders of correlation array output from the inverse transform function 230. These spurious peaks arise as a result of strong correlation of underlying video content and are not generated by any consequence of scale factor change. Since these spurious peaks potentially mask in magnitude correlation peaks relating to watermark content of interest, these spurious peaks are set to zero value, namely they are subjected to a cropping operation. In other words, correlation values corresponding to elements of the window 118 close to its borders are effectively set to zero. For example, first and last five rows and columns of a 128 x 128 element output correlation field from the point-wise multiplication function 210 are set to zero.

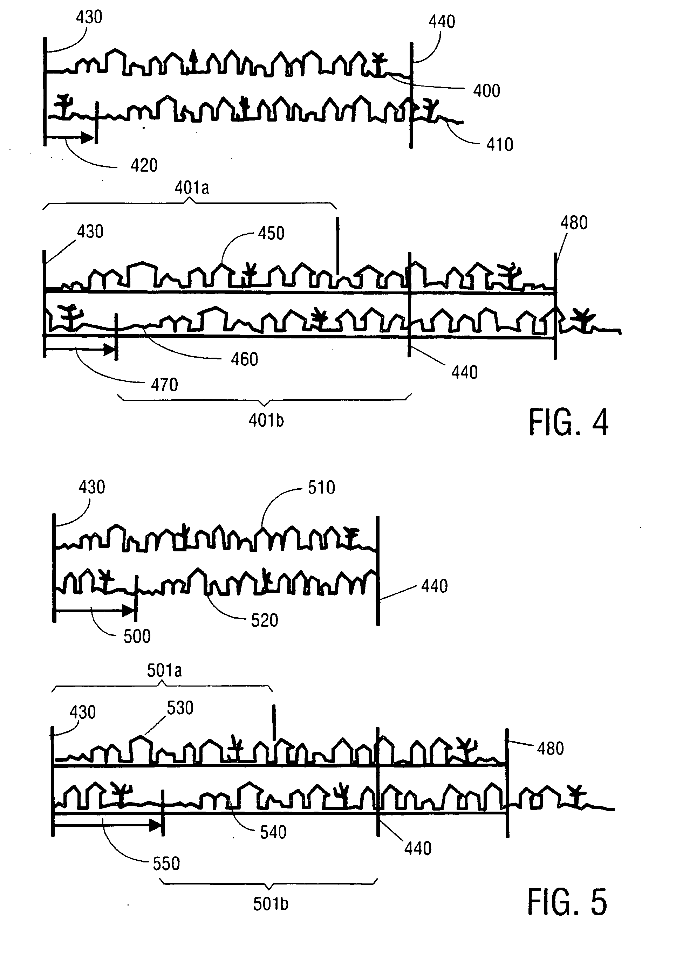

A highest correlation peak identified by the function 250 is used to determine a measure of scale factor (MSF) as illustrated by several one-dimensional examples in Figs. 4 to 10.

In Fig. 4, an un-shifted periodic watermark pattern comprising 128 elements, for example 128 pixels, is denoted by 400 and is included within limits 430 and 440 defining a range of 128 elements (pixels in the case of video). A cyclically shifted version of the same watermark pattern is denoted 410. It is shifted by a shift distance s denoted by an arrow 420, namely by s=24 elements. Obviously, if the patterns 400 and 410 are correlated with each other, a correlation peak will be found at position s=24.

If the patterns 400, 410 are both spatially scaled by a zoom factor z, for example due to reformatting the watermarked video content in a temporally alternating manner as depicted in Fig. 1, then the patterns 450 and 460, respectively, will be obtained instead. The patterns now lie within a range from the first limit 430 and a wider zoom limit 480. Calculating the correlation between the two patterns 450, 460 in the area of interest (the area between the borders 430 and 440) will now yield a strong correlation peak at position s × z, denoted by an arrow 470. Thus, if the peak is found at position 33, then the zoom factor appears to be z=33/24=1.38. The strength of the peak is determined by the number of similar elements (pixels) in the intervals denoted 401a and 401b, which is 128 - s × z.

As a further example, there is shown in Fig. 5 a watermark pattern plotted in a similar manner to Fig. 4 except that a transformation corresponding to a modulus shift of 32 elements, for example 32 pixels, as denoted by an arrow 500 applied to a watermark pattern 510 to generate an associated transformed watermark pattern 520. The patterns 510, 520 are embedded into video content in a manner as depicted in Fig. 1. A zoom factor z = 1.38 has again been applied to the patterns 510, 520, now resulting in re-scaled patterns 530, 540 respectively. A correlation peak will now be obtained at position 44 (1.38 × 32), denoted by an arrow 550. The correlation peak will be somewhat smaller in comparison with the previous example, because the number 128 - s × z of similar pixels in the intervals 501a and 501b is smaller.

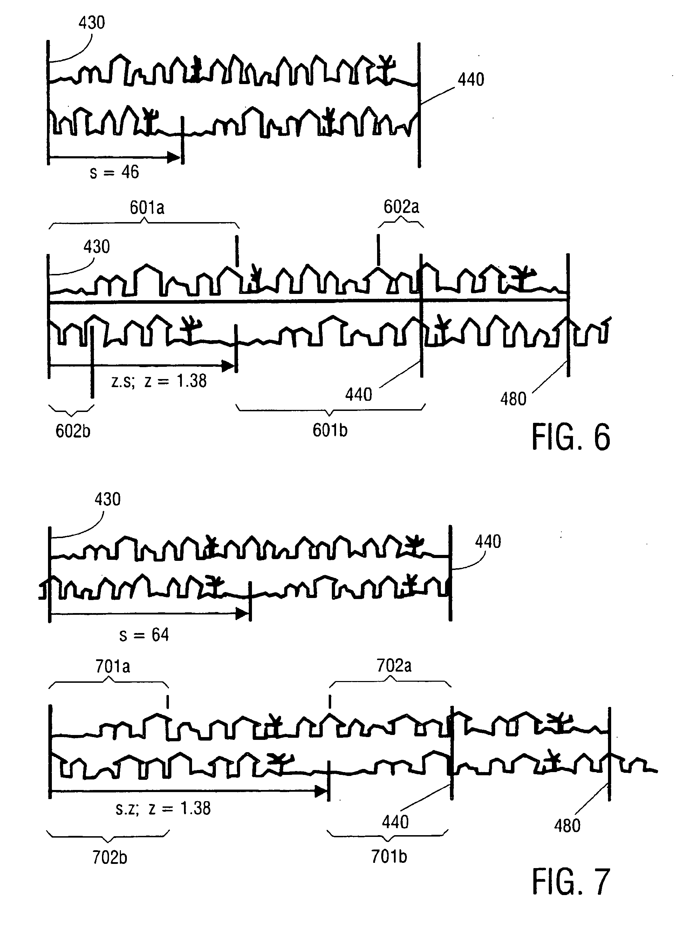

In Fig. 6, an example is plotted for a modulus translation shift of s = 46 pixels and a re-scaling z = 1.38. In this example, we will not only obtain a correlation peak at position s × z = 63 because of the similarity between the intervals 601a and 601b having lengths 128 - s × z. There will also be a second correlation peak due to the similarity between intervals 602a and 602b having lengths s × z -128 × z + 128. They cause a (smaller) correlation peak to appear at position s × z -128 × z + 128, i.e. at position 14 in this example.

In Fig. 7, an example is plotted for a modulus translation shift of s = 64 pixels and a re-scaling z = 1.38. This is an interesting example, because we see two equally large correlation peaks. One peak, at position s × z = 33, is caused by the similarity of intervals 701a and 701b. The other one, at position s × z -128 × z + 128 = 69, is caused by the similarity of the equally long intervals 702a and 702b. Using patterns shifted over 64 pixels will not give any information about how the scale factor has to be calculated. Since both correlation peaks can occur with an equal chance, we do not know which formula we have to use (s × z or s × z - 128 × z + 128). We can not see whether the video is scaled up or scaled down. Apparently, taking a shift factor of half the tile size is the worst choice.

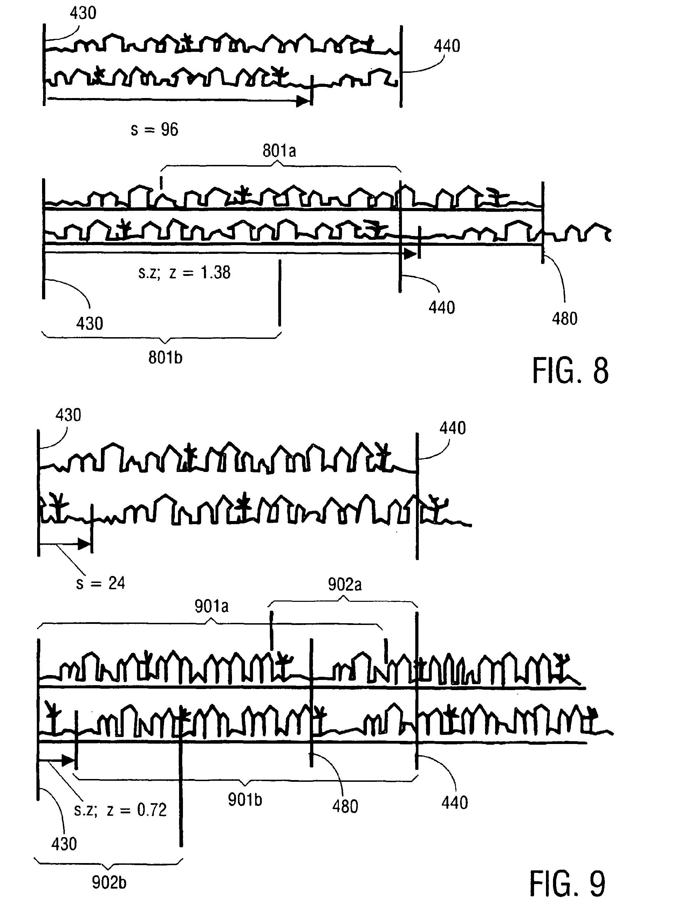

In Fig. 8, an example is plotted for a modulus translation shift of s = 96 pixels and a re-scaling z = 1.38. There will be one correlation peak at position s × z - 128 × z + 128 = 84, due to the similarity of intervals 801a and 801b.

In Fig. 9, an example is plotted for a modulus translation shift of s = 24 pixels and a re-scaling z = 0.72. Now the image has been downscaled, which causes the right limit 480 to be located to the left of original limit 440. A first correlation peak now appears at position s × z = 17 due to the similarities of intervals 901a and 901b. A second correlation peak appears at position s × z -128 × z + 128 = 53 due to the similarities of intervals 902a and 902b.

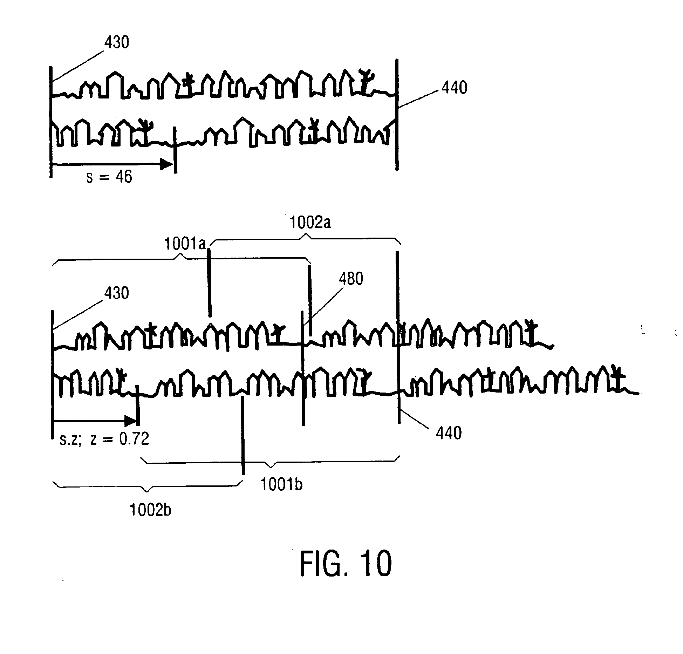

In Fig. 10, an example is plotted for a modulus translation shift of s = 46 pixels and a re-scaling z = 0.72. A first correlation peak appears at position s × z = 33 due to the similarities of intervals 1001a and 1001b. A second correlation peak appears at position s × z -128 × z + 128 = 69 due to the similarities of intervals 1002a and 1002b.

From Figs. 4 to 10, it is observed for the re-scaled patterns that one or two correlation peaks are obtained:

(1) at a position s x z with a correlation peak height related to 128-(s x z);

(2) at a position (s x z) - (128 x z) + 128 with a correlation peak height related to (sxz)-(128xz)+ 128

where s denotes a shift, for example s = 24 for Fig. 4. The height of the correlation peak is related to a range of l to 128, otherwise the peak is deemed not to exist. In devising the watermark detector operating according to the procedure depicted in Fig. 2, it is convenient that correlation occurring within the point-wise multiplication function 210 only generates one correlation peak.

One solution to achieve such a single correlation peak is to select the shift s pursuant to Equation 4 (Eq. 4):

$$L - s.z \gg s.z - L.z + L \qquad\qquad\text{Eq. 4}$$

wherein L is the size of the watermark, namely 128 elements as depicted in Figs. 4 to 10. From Equation 4, it will be appreciated for this solution that the shift s is preferably much less than L/2, for preferable s<L/4. A scale factor z can then be derived using Equation 5 (Eq. 5):

$$z = \frac{H_p}{s} \qquad\qquad\text{Eq. 5}$$

wherein $H_p$ is the position of the highest correlation peak generated in the point-wise multiplication function 210.

Another solution to achieve such a single correlation peak is to select the shift s pursuant to Equation 6 (Eq. 6):

$$L - s.z \ll s.z - L.z + L \qquad\qquad\text{Eq. 6}$$

wherein L is the size of the watermark, namely 128 elements as depicted in Figs. 4 to 10. From Equation 4, it will be appreciated for this solution that the shift s is preferably much greater than L/2. A scale factor z can then be derived using Equation 7 (Eq. 7):

$$z = \frac{(H_p - L)}{(s - L)} \qquad\qquad\text{Eq. 7}$$

In implementing watermarking of video content so as to be optimally compatible with the process depicted in Fig. 2, it is beneficial to take the following criteria into account:

(a) where there are several correlation peaks identified in the peak detection function 250, one of the correlation peaks identified is preferably permitted to overrule another correlation peak identified;
(b) the length of an element array, for example pixel array, contributing to correlation calculation executed within the point-wise multiplication function 210 is maximized; and
(c) the shift s is selected so that an enhanced resolution/accuracy is obtainable when calculating the scale factor z.

These conditions (a)-(c) potentially mutually contradict and often a compromise is required. Conveniently, for L = 128 elements, for example pixels, a practical compromise is:

(1) s = 20 with Equation 5 used to determine the scale factor z; or
(2) s = 107 with Equation 7 used to determine the scale factor z.

Similar considerations pertain to mirror-transposed watermarks and rotation transposed watermarks.
The inventors have further appreciated that use of alternating watermark patterns as depicted in Fig. 1 preferably is supported by hardware and/or software functions providing synchronization so that the detector is aware of occurrence of the time-slots 30. Preferably, a temporal watermark akin to that employed in contemporary digital cameras is included for synchronization purposes. Other types of time markers for synchronization purposes are susceptible to being employed, for example digital control signals included with the video programme content.
In the accompanying claims, numerals and other symbols included within brackets are included to assist understanding of the claims and are not intended to limit the scope of the claims an any way.
It will be appreciated that embodiments of the invention described in the foregoing are susceptible to being modified without departing from the scope of the invention as defined by the accompanying claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

**Claims**

1. A method of determining a measure of scale factor (MSF) by detecting a watermark included in a sequence (10) of images (20) wherein the watermark is included in several mutually changed forms in the sequence (10), the method comprising steps of:

   (a) receiving the sequence (10) of images (20);
   (b) sorting the images (20) into a plurality of corresponding groups depending upon one or more relative changes applied to their included watermarks;
   (c) accumulating for each group at least a portion of one or more images thereof into corresponding buffers (130, 180);
   (d) correlating contents of the buffers (130, 180) to determine one or more changes applied to the watermark included in the sequence (10); and
   (e) processing information concerning the one or more changes in relation to an expected scale factor to determine said measure of scale factor (MSF).

2. A method according to claim 1, wherein the one or more changes detected include at least one of: a translation change, a mirror-transposition change, and a rotation change.

3. A method according to claim 1, wherein the analysis in step (d) includes steps of:

   (f) converting (150, 200) contents of the buffers (130, 180) into corresponding data sets respectively in a spatial frequency form;
   (g) point-wise multiplying the data sets to generate corresponding processed data; and then
   (h) converting the processed data to a spatial format (230).

4. A method according to claim 3, further including a step ofnormalizing (220) the processed data prior to converting the processed data to the spatial format.

5. A method according to claim 3, including steps of subjecting contents of the buffers (130, 180) to high-pass spatial filtration (140, 190) prior to converting them to corresponding data sets.

6. A method according claim 3, wherein step (e) includes steps of:

   (i) analyzing (250) the processed data in spatial format for determining positions of one or more correlation peaks; and
   (j) deriving the measure of scale factor (MSF) from the positions of the one or more peaks.

7. A method according to claim 6, further comprising a step of cropping (240) the processed data in spatial format to remove spurious peripheral correlation arising from correlation of image programme content prior to identifying the one or more peaks for determining the measure of scale factor (MSF).

8. A method according to claim 1, adapted for determining measures of scale factor (MSF) in a plurality of mutually different image directions.

9. A method according to claim 1, wherein the one or more changes applied to the watermark in the sequence includes a translation in at least one direction of magnitude s arranged to be less than half a width L of the watermark in the at least one direction, such that the measure of scale factor is calculated from $z = (H_p/s)$ where $H_p$ is a determined position of a peak of correspondence.

10. A method according to claim 1, wherein the one or more changes applied to the sequence of images includes a translation in at least one direction of magnitude s arranged to be more than half a width L of the watermark in the at least one direction, such that the measure of scale factor is calculated from z = ($H_p$ - L) / (s - L) where $H_p$ is a determined position of a peak of correspondence.

**11.** A watermark detector for determining a measure of scale factor (MSF) by detecting a watermark in a sequence of images wherein the watermark is included in several mutually changed forms in the sequence, the detector including:

(a) switching means for sorting images included in the sequence into groups corresponding to one or more changes applied to their watermarks;
(b) buffers for accumulating at least a portion of one or more images from the groups;
(c) analyzing means for correlating contents of buffers to determine the one or more changes applied to the watermark in the sequence; and
(d) processing means for processing information concerning the one or more changes in relation to an expected scale factor for determining said measure of scale factor (MSF).

**12.** Software executable in computer hardware for implementing the method of claim 1.

**Patentansprüche**

**1.** Verfahren zum Bestimmen eines Maßes für einen Maßstabsfaktor (engl. measure of scale factor, MSF) durch Erfassen eines in einer Sequenz (10) von Bildern (20) enthaltenen Wasserzeichens, wobei das Wasserzeichen in mehreren zueinander veränderten Formen in der Sequenz (10) enthalten ist, wobei das Verfahren die folgenden Schritte umfasst:

(a) Empfangen der Sequenz (10) von Bildern (20);
(b) Einsortieren der Bilder (20) in eine Vielzahl von entsprechenden Gruppen abhängig von einer oder mehreren relativen Veränderungen, die an ihren enthaltenen Wasserzeichen vorgenommen wurden;
(c) für jede Gruppe Kumulieren von mindestens einem Teil von einem oder mehreren Bildern daraus in entsprechenden Zwischenspeichern (130, 180);
(d) Korrelieren der Inhalte der Zwischenspeicher (130, 180), um eine oder mehrere Veränderungen zu bestimmen, die an dem in der Sequenz (10) enthaltenen Wasserzeichen vorgenommen wurden; und
(f) Verarbeiten von Informationen bezüglich der einen oder den mehreren Veränderungen in Bezug auf einen erwarteten Maßstabsfaktor, um das genannte Maß des Maßstabsfaktors (MSF) zu bestimmen.

**2.** Verfahren nach Anspruch 1, wobei die erfassten eine oder mehrere Veränderungen mindestens entweder eine Translationsveränderung, eine Spiegeltranspositionsveränderung oder eine Rotationsveränderung umfassen.

**3.** Verfahren nach Anspruch 1, wobei die Analyse in Schritt (d) die folgenden Schritte umfasst:

(f) Konvertieren (150, 200) der Inhalte der Zwischenspeicher (130, 180) in jeweils entsprechende Datensätze in einer räumlichen Frequenzform,
(g) punktweise Multiplizieren der Datensätze, um entsprechende verarbeitete Daten zu erzeugen; und dann
(h) Konvertieren der verarbeiteten Daten in ein räumliches Format (230).

**4.** Verfahren nach Anspruch 3, das weiterhin einen Schritt des Normalisierens (220) der verarbeiteten Daten vor dem Konvertieren der verarbeiteten Daten in das räumliche Format umfasst.

**5.** Verfahren nach Anspruch 3, das die Schritte der räumlichen Hochpassfilterung (140, 190) der Inhalte der Zwischenspeicher (130, 180) vor ihrer Konvertierung in entsprechende Datensätze umfasst.

**6.** Verfahren nach Anspruch 3, wobei Schritt (e) die folgenden Schritte umfasst:

(i) Analysieren (250) der verarbeiteten Daten in räumlichem Format zum Bestimmen der Positionen von einem oder mehreren Korrelationspeaks; und
(j) Ableiten des Maßes des Maßstabsfaktors (MSF) von den Positionen des einen oder der mehreren Peaks.

**7.** Verfahren nach Anspruch 6, das weiterhin einen Schritt des Beschneidens (240) der verarbeiteten Daten in räumlichem Format umfasst, um störende periphere Korrelationen zu entfernen, die sich aus der Korrelation des Bildprogramminhalts ergeben, bevor der eine oder die mehreren Peaks zum Bestimmen des Maßes des Maßstabsfaktors (MSF) identifiziert werden.

8. Verfahren nach Anspruch 1, das dafür eingerichtet ist, Maße des Maßstabsfaktors (MSF) in einer Vielzahl von zueinander unterschiedlichen Bildrichtungen zu bestimmen.

9. Verfahren nach Anspruch 1, wobei die eine oder mehreren an dem Wasserzeichen in der Sequenz vorgenommenen Veränderungen eine Translation in mindestens eine Größenrichtung s umfassen, die so beschaffen ist, dass sie weniger als die Hälfte einer Breite L des Wasserzeichens in der mindestens einen Richtung beträgt, so dass das Maß des Maßstabsfaktors aus $z = (Hp/s)$ berechnet wird, wobei Hp eine ermittelte Position eines Übereinstimmungspeaks ist.

10. Verfahren nach Anspruch 1, wobei die eine oder mehreren an der Sequenz von Bildern vorgenommenen Veränderungen eine Translation in mindestens eine Größenrichtung s umfassen, die so beschaffen ist, dass sie mehr als die Hälfte einer Breite L des Wasserzeichens in der mindestens einen Richtung beträgt, so dass das Maß des Maßstabsfaktors aus $z = (H_p - L) / (s - L)$ berechnet wird, wobei $H_p$ eine ermittelte Position eines Übereinstimmungspeaks ist.

11. Ein Wasserzeichendetektor zum Bestimmen eines Maßes des Maßstabsfaktors (MSF) durch Erfassen eines Wasserzeichens in einer Sequenz von Bildern, wobei das Wasserzeichen in mehreren zueinander veränderten Formen in der Sequenz enthalten ist, wobei der Detektor Folgendes umfasst:

(a) Umschaltmittel zum Einsortieren von in der Sequenz enthaltenen Bildern in Gruppen, die einer oder mehreren an ihren Wasserzeichen vorgenommenen Veränderungen entsprechen;
(b) Zwischenspeicher zum Kumulieren von mindestens einem Teil von einem oder mehreren Bildern aus der Gruppe;
(c) Analysemittel zum Korrelieren der Inhalte der Zwischenspeicher, um die eine oder mehreren Veränderungen zu bestimmen, die an dem Wasserzeichen in der Sequenz vorgenommen wurden; und
(d) Verarbeitungsmittel zum Verarbeiten von Informationen bezüglich der einen oder den mehreren Veränderungen in Bezug auf einen erwarteten Maßstabsfaktor, um das genannte Maß des Maßstabsfaktors (MSF) zu bestimmen.

12. In Computer-Hardware ausführbare Software zur Implementierung des Verfahrens nach Anspruch 1.

## Revendications

1. Procédé permettant de déterminer une mesure de facteur d'échelle (MSF) en détectant un filigrane inclus dans une séquence (10) d'images (20) dans laquelle le filigrane est inclus sous plusieurs formes changées les unes par rapport aux autres dans la séquence (10), le procédé comprenant les étapes suivantes :

(a) la réception de la séquence (10) d'images (20);
(b) le tri des images (20) en une pluralité de groupes correspondants en fonction d'un ou de plusieurs changements relatifs apportés aux filigranes inclus dans celles-ci;
(c) l'accumulation pour chaque groupe d'une partie au moins d'une ou de plusieurs des images de ceux-ci dans des tampons correspondants (130, 180);
(d) la corrélation du contenu des tampons (130, 180) pour déterminer un ou plusieurs changements apportés au filigrane inclus dans la séquence (10), et
(e) le traitement d'informations concernant le ou les changements par rapport à un facteur d'échelle attendu pour déterminer ladite mesure de facteur d'échelle (MSF).

2. Procédé suivant la revendication 1, dans lequel le ou les changements détectés incluent au moins un élément parmi le groupe comprenant un changement par translation, un changement par transposition inverse et un changement par rotation.

3. Procédé suivant la revendication 1, dans lequel l'analyse à l'étape (d) inclut les étapes suivantes :

(f) la conversion (150, 200) du contenu des tampons (130, 180) enjeux de données correspondants respectivement sous une forme fréquencielle spatiale ;

(g) la multiplication point par point des jeux de données pour générer des données traitées correspondantes, et ensuite

(h) la conversion des données traitées dans un format spatial (230).

**4.** Procédé suivant la revendication 3, incluant en outre une étape de normalisation (220) des données traitées avant la conversion des données traitées au format spatial.

**5.** Procédé suivant la revendication 3, incluant des étapes de soumission du contenu des tampons (130, 180) à un filtrage spatial passe-haut (140, 190) avant sa conversion en jeux de données correspondants.

**6.** Procédé suivant la revendication 3, dans lequel l'étape (e) inclut les étapes suivantes :

(i) l'analyse (250) des données traitées dans un format spatial pour déterminer les positions d'un ou de plusieurs maximums de corrélation, et

(j) la dérivation de la mesure de facteur d'échelle (MSF) des positions du ou des maximums.

**7.** Procédé suivant la revendication 6, comprenant en outre une étape d'élagage (240) des données traitées dans un format spatial pour éliminer la corrélation périphérique parasite découlant de la corrélation du contenu de programme d'image avant l'identification du ou des maximums pour déterminer la mesure de facteur d'échelle (MSF).

**8.** Procédé suivant la revendication 1, à même de déterminer des mesures de facteur d'échelle (MSF) dans une pluralité de directions d'image différentes les unes des autres.

**9.** Procédé suivant la revendication 1, dans lequel le ou les changements apportés au filigrane dans la séquence incluent une translation dans une direction au moins de grandeur s pouvant être inférieure à la moitié d'une largeur L du filigrane dans la au moins une direction, de sorte que la mesure de facteur d'échelle est calculée à partir de z = ($H_p$/s) où $H_p$ est une position déterminée d'un maximum de correspondance.

**10.** Procédé suivant la revendication 1, dans lequel le ou les changements apportés à la séquence d'images incluent une translation dans une direction au moins de grandeur s pouvant être supérieure à la moitié d'une largeur L du filigrane dans la au moins une direction, de sorte que la mesure de facteur d'échelle est calculée à partir de z = ($H_p$ - L) / (s - L) où $H_p$ est une position déterminée d'un maximum de correspondance.

**11.** Détecteur de filigrane pour déterminer une mesure de facteur d'échelle (MSF) en détectant un filigrane dans une séquence d'images dans laquelle le filigrane est inclus sous plusieurs formes changées les unes par rapport aux autres dans la séquence, le détecteur incluant :

(a) des moyens de commutation pour trier les images incluses dans la séquence en groupes correspondant à un ou plusieurs changements apportés aux filigranes inclus dans celles-ci ;

(b) des tampons pour accumuler une partie au moins d'une ou de plusieurs images des groupes ;

(c) des moyens d'analyse pour corréler le contenu des tampons pour déterminer le ou les changements apportés au filigrane dans la séquence, et

(d) des moyens de traitement pour traiter des informations concernant le ou les changements par rapport à un facteur d'échelle attendu pour déterminer ladite mesure de facteur d'échelle (MSF).

**12.** Logiciel exécutable sur un matériel informatique pour mettre en oeuvre le procédé suivant la revendication 1.

FIG. 1

FIG. 2

FIG. 3

FIG. 4

FIG. 5

FIG. 6

FIG. 7

430

440

s = 96

801a

s.z; z = 1.38

430

480

440

801b

**FIG. 8**

430

440

s = 24

902a

901a

s.z; z = 0.72

430

901b

480

440

902b

**FIG. 9**

430

440

s = 46

1002a

1001a

430

480

s.z; z = 0.72

440

1001b

1002b

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000151984 B

**Non-patent literature cited in the description**

- Spatial synchronization Using Watermark Key Structure. *Proc. of SPIE-IS&T Electronic Imaging, SPIE,* 2004, vol. 5306

- **U. WESSELY ; G. SCHELLER ; S. EICHNER.** Watermarking System for Analog or Compressed Video. *CISST '03 International Conference,* vol. 03, 371-377